# EUROPEAN PATENT APPLICATION

(11) **EP 4 488 125 A1**
(43) Date of publication of application: **08.01.2025**
(21) Application number: 23760195.0
(22) Date of filing: 28.02.2023
(51) Int. Cl.: B60R 16/02, G06Q 30/015

(54) **CONTENT EVALUATION DEVICE, CONTENT EVALUATION METHOD, PROGRAM, AND STORAGE MEDIUM**

(30) Priority: 28.02.2022 JP 2022029024
(71) Applicant: Pioneer Corporation, Tokyo 113-0021 (JP)
(72) Inventor: IIZAWA, Takashi, Kawagoe-shi, Saitama 350-8555 (JP); KURAMOCHI, Keita, Tokyo 113-0021 (JP); WAGURI, Daiki, Tokyo 112-0002 (JP); SUZUKI, Kei, Kawagoe-shi, Saitama 350-8555 (JP)
(74) Representative: Viering, Jentschura & Partner mbB Patent- und Rechtsanwälte
(86) International application number: PCT/JP2023/007203
(87) International publication number: WO 2023/163197

(57) **Abstract**

The content evaluation device includes a content acquisition unit, an output unit, a voice recognition unit and an evaluation unit. The content acquisition unit acquires a voice content to be output to a passenger of a vehicle. The output unit outputs the voice content. The voice recognition unit performs a voice recognition process for recognizing predetermined words included in utterance of the passenger after the voice content is output. The evaluation unit evaluates effectiveness of the voice content output to the passenger based on a result of the voice recognition process.

## Description

### TECHNICAL FIELD

The present invention relates to a technique available in the evaluation of push-type content.

### BACKGROUND TECHNIQUE

Conventionally, there is known a push-type content output technique in which a content corresponding to the information is output to the user, without a request from the user, based on various information obtained through a sensor or the like.

Specifically, for example, Patent Document 1 discloses a technique for outputting a greeting voice at the time of boarding and disembarking of a passenger of the vehicle, based on the information obtained through a vibration sensor or the like for detecting the opening and closing of the door of the vehicle.

### RELATED ART DOCUMENT

### PATENT DOCUMENT

Patent Document 1: Japanese Patent Application Laid-Open under No. 2003-237453

### SUMMARY OF THE INVENTION

### PROBLEM TO BE SOLVED BY THE INVENTION

Since the feedback indicating the user's response cannot be obtained by the output of the push-type content, it is not possible to evaluate the effectiveness of the content output to the user.

Therefore, for example, when the push-type content is output during the driving of the vehicle, it is not possible to evaluate the effectiveness of the content output to the passenger of the vehicle.

In this view, Patent Document 1 does not particularly disclose a technique capable of solving the above problem. Therefore, according to the configuration disclosed in Patent Document 1, the above problem still remains.

The present invention has been made to solve the above problem. The main object of the present invention is to provide a content evaluation device capable of evaluating the effectiveness of the push-type content output to the passenger of the vehicle.

### MEANS FOR SOLVING THE PROBLEM

An invention described in claim is a content evaluation device comprising: a content acquisition unit configured to acquire a voice content to be output to a passenger of a vehicle; an output unit configured to output the voice content; a voice recognition unit configured to perform a voice recognition process for recognizing predetermined words included in utterance of the passenger after the voice content is output; and an evaluation unit configured to evaluate effectiveness of the voice content output to the passenger based on a result of the voice recognition process.

An invention described in claim is a content evaluation method comprising: acquiring a voice content to be output to a passenger of a vehicle; outputting the voice content; performing a voice recognition process for recognizing predetermined words included in utterance of the passenger after the voice content is output; and evaluating effectiveness of the voice content output to the passenger based on a result of the voice recognition process.

An invention described in claim is a program executed by a content evaluation device including a computer, the program causing the computer to execute: acquiring a voice content to be output to a passenger of a vehicle; outputting the voice content; performing a voice recognition process for recognizing predetermined words included in utterance of the passenger after the voice content is output; and evaluating effectiveness of the voice content output to the passenger based on a result of the voice recognition process.

### BRIEF DESCRIPTION OF THE DRAWINGS

[FIG. 1] FIG. 1 is a diagram showing a configuration example of a voice output system according to an embodiment.
[FIG. 2] FIG. 2 is a block diagram showing a schematic configuration of a voice output device.
[FIG. 3] FIG. 3 shows an example of a schematic configuration of a server device.
[FIG. 4] FIG. 4 is a flowchart for describing processing performed on the server device.

### MODES FOR EXERCISING THE INVENTION

According one aspect of the present invention, there is provided a content evaluation device comprising: a content acquisition unit configured to acquire a voice content to be output to a passenger of a vehicle; an output unit configured to output the voice content; a voice recognition unit configured to perform a voice recognition process for recognizing predetermined words included in utterance of the passenger after the voice content is output; and an evaluation unit configured to evaluate effectiveness of the voice content output to the passenger based on a result of the voice recognition process.

The above content evaluation device includes a content acquisition unit, an output unit, a voice recognition unit and an evaluation unit. The content acquisition unit acquires a voice content to be output to a passenger of a vehicle. The output unit outputs the voice content. The voice recognition unit performs a voice recognition process for recognizing predetermined words included in utterance of the passenger after the voice content is output. The evaluation unit evaluates effectiveness of the voice content output to the passenger based on a result of the voice recognition process. Thus, it is possible to evaluate the effectiveness of the push-type content output to the passenger of the vehicle.

In one mode of the above content evaluation device, the evaluation unit acquires a score according to a number of times that the predetermined word is recognized by the voice recognition process, as an index for evaluating the effectiveness of the voice content.

In another mode of the above content evaluation device, the voice recognition unit performs the voice recognition process in a period from immediately after the voice content is output until a predetermined time elapses.

In still another mode of the above content evaluation device, the voice recognition unit stops the voice recognition process when a predetermined time has elapsed from the timing at which the score is last acquired after the voice content is output.

In still another mode of the above content evaluation device, the voice recognition unit recognizes, as the predetermined words, at least one of a word indicating exclamation on the voice content and a keyword in the voice content.

According to another aspect of the present invention, there is provided a content evaluation method comprising: acquiring a voice content to be output to a passenger of a vehicle; outputting the voice content; performing a voice recognition process for recognizing predetermined words included in utterance of the passenger after the voice content is output; and evaluating effectiveness of the voice content output to the passenger based on a result of the voice recognition process. Thus, it is possible to evaluate the effectiveness of the push-type content output to the passenger of the vehicle.

According to still another aspect of the present invention, there is provided a program executed by a content evaluation device including a computer, the program causing the computer to execute: acquiring a voice content to be output to a passenger of a vehicle; outputting the voice content; performing a voice recognition process for recognizing predetermined words included in utterance of the passenger after the voice content is output; and evaluating effectiveness of the voice content output to the passenger based on a result of the voice recognition process. By executing this program on a computer, the above-described content evaluation device can be realized. The program can be stored in a storage medium for use.

### EMBODIMENT

A preferred embodiment of the present invention will be described below with reference to the attached drawings.

### [System configuration]

### (Overall configuration)

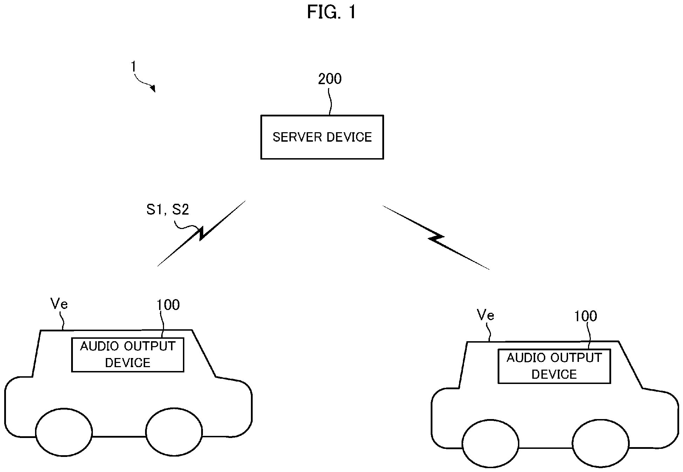

FIG. 1 is a diagram showing a configuration example of a voice output system according to the embodiment. The voice output system 1 according to the embodiment includes voice output devices 100 and a server device 200. The voice output device 100 is mounted on a vehicle Ve. The server device 200 communicates with a plurality of voice output devices 100 mounted on a plurality of vehicles Ve.

The voice output device 100 basically performs route guidance processing and information providing processing for a user who is a passenger of the vehicle Ve. For example, when a destination or the like is input by the user, the voice output device 100 transmits an upload signal S1 including the position information of the vehicle Ve and the information on the designated destination to the server device 200. The server device 200 refers to the map data, calculates a route to the destination, and transmits a control signal S2 indicating the route to the destination to the voice output device 100. The voice output device 100 performs the route guidance for the user by the voice output, based on the received control signal S2.

Also, the voice output device 100 provides various kinds of information to the user by interacting with the user. For example, when the user makes an information request, the voice output device 100 supplies the server device 200 with the upload signal S1 including information indicating the content or type of the information requested by the user and information about the driving state of the vehicle Ve. The server device 200 acquires and generates the data requested by the user, and transmits it to the voice output device 100 as the control signal S2. The voice output device 100 provides the received information to the user by the voice output.

### (Voice output device)

The voice output device 100 moves with the vehicle Ve, and provides voice-based route guidance so that the vehicle Ve travels along the guidance route. Note that "voice-based route guidance" refers to the route guidance in which the user can grasp information required for driving the vehicle Ve along the guidance route at least from voice only, and does not exclude that the voice output device 100 supplementally displays a map or the like around the current position. In the present embodiment, the voice output device 100 outputs various information related to the driving, such as a point on the route at which the guidance is required (also referred to as a "guidance point"), by voice. Here, the guidance point corresponds to, for example, an intersection with a right and left turn of the vehicle Ve, or other important passing points for the vehicle Ve to travel along the guidance route. The voice output device 100 performs voice guidance about the guidance point such as the distance from the vehicle Ve to the next guidance point and the direction of travel at the guidance point, for example. Hereinafter, the voice related to the guidance route is also called "route guidance voice".

The voice output device 100 is mounted, for example, on the upper part of a windshield or on a dashboard of the vehicle Ve. Incidentally, the voice output device 100 may be incorporated into the vehicle Ve.

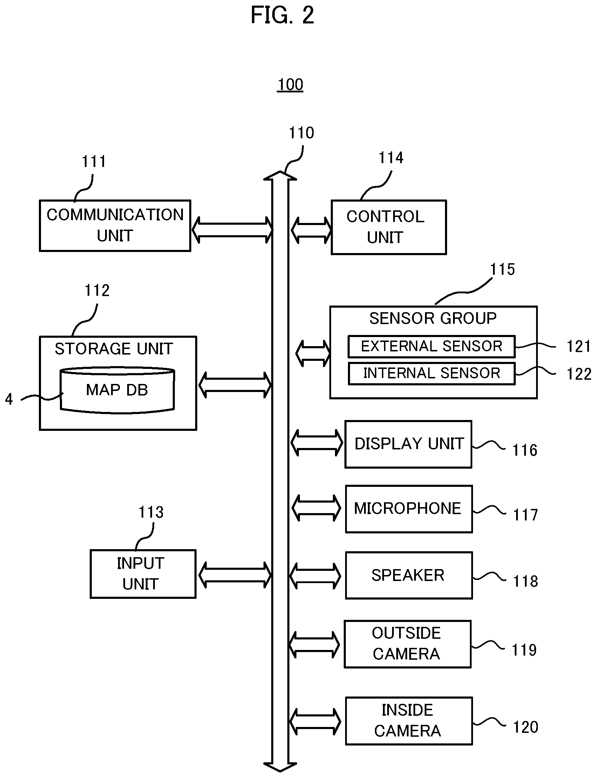

FIG. 2 is a block diagram showing the schematic configuration of the voice output device 100. The voice output device 100 mainly includes a communication unit 111, a storage unit 112, an input unit 113, a control unit 114, a sensor group 115, a display unit 116, a microphone 117, a speaker 118, an outside camera 119, and an inside camera 120. Each element in the voice output device 100 is connected to one another via a bus line 110.

The communication unit 111 performs data communication with the server device 200 based on the control of the control unit 114. The communication unit 111 may receive map data for updating a map DB (DataBase) 4 to be described later from the server device 200, for example.

The storage unit 112 is composed of various memories such as a RAM (Random Access Memory), a ROM (Read Only Memory), a non-volatile memory (including a hard disk drive, a flash memory, etc.). The storage unit 112 stores programs for the voice output device 100 to execute a predetermined processing. The above-described programs may include an application program for performing the route guidance, an application program for playing music, an application program for outputting contents (such as a TV) other than music, and the like. The storage unit 112 is also used as a working memory of the control unit 114. The programs to be executed by the voice output device 100 may be stored in a storage medium other than the storage unit 112.

The storage unit 112 stores the map database (hereinafter, the database is referred to as "DB") 4. The map DB 4 stores various data required for the route guidance. The map DB 4 stores, for example, road data representing the road network by a combination of nodes and links, and facility data indicating facilities that are candidates for a destination, a stopover place, and a landmark. The map DB 4 may be updated based on the map information that the communication unit 111 receives from the map management server under the control of the control unit 114.

The input unit 113 is a button, a touch panel, a remote controller, or the like for the user to make an operation. The display unit 116 is a display that performs display based on the control of the control unit 114. The microphone 117 collects the sound in the vehicle Ve, particularly the utterance of the driver or the like. The speaker 118 outputs route guidance voices to the driver or the like.

The sensor group 115 includes an external sensor 121 and an internal sensor 122. The external sensor 121 includes one or more sensors, such as a lidar, radar, ultrasonic sensor, infra-red sensor, sonar, and the like, for recognizing the surrounding environment of the vehicle Ve. The internal sensor 122 is a sensor that performs positioning of the vehicle Ve, and is a GNSS (Global Navigation Satellite System) receiver, a gyro sensor, an IMU (Inertial Measurement Unit), a vehicle speed sensor, or the combination thereof, for example. The sensor group 115 may include a sensor by which the control unit 114 can derive the position of the vehicle Ve directly or indirectly (i.e., by performing an estimation process) from the outputs of the sensor group 115.

The outside camera 119 is a camera for shooting the outside of the vehicle Ve. The outside camera 119 may be only a front camera that shoots the front of the vehicle, may include a rear camera that shoots the rear of the vehicle in addition to the front camera, and may be an omnidirectional camera that can shoot all around the vehicle Ve. On the other hand, the inside camera 120 is a camera for shooting the interior of the vehicle Ve, and is provided at a position capable of shooting at least the area around the driver's seat.

The control unit 114 includes a CPU (Central Processing Unit), a GPU (Graphics Processing Unit) and controls the entire voice output device 100. For example, the control unit 114 estimates the position (including the direction of the traveling direction) of the vehicle Ve based on the outputs of one or more sensors of the sensor group 115. When the destination is designated by the input unit 113 or the microphone 117, the control unit 114 generates the route information indicating the guidance route to the destination and performs the route guidance based on the route information, the estimated position information of the vehicle Ve, and the map DB 4. In this case, the control unit 114 outputs the route guidance voice from the speaker 118. The control unit 114 controls the display unit 116 to display information of the music being played back, video contents, or a map around the current position.

The processing executed by the control unit 114 is not limited to being implemented by software based on a program, but may be implemented by any combination of hardware, firmware, and software. The processing executed by the control unit 114 may be implemented by a user-programmable integrated circuit such as a FPGA (field-programmable gate array) or a microcomputer. In that case, the program executed by the control unit 114 in the present embodiment may be realized by using this integrated circuit. Thus, the control unit 114 may be implemented by hardware other than a processor.

The configuration of the voice output device 100 shown in FIG. 2 is an example, and various changes may be made to the configuration shown in FIG. 2. For example, instead of storing the map DB 4 in the storage unit 112, the control unit 114 may receive information required for the route guidance from the server device 200 through the communication unit 111. In another example, instead of including the speaker 118, the voice output device 100 may be connected to a voice output unit configured separately from the voice output device 100 by an electrical or known communication means to output the voice from the voice output unit. In this case, the voice output unit may be a speaker provided in the vehicle Ve. In yet another example, the voice output device 100 may not include the display unit 116. In this case, the voice output device 100 may perform no control related to the display at all, or may perform a predetermined display by electrically connecting to the on-vehicle display unit provided in the vehicle Ve by wired or wireless communication. Similarly, instead of including the sensor group 115, the voice output device 100 may acquire information output from the sensors attached to the vehicle Ve from the vehicle Ve, using a communication protocol such as a CAN (Controller Area Network).

### (Server device)

Based on the upload signal S1 including the destination or the like received from the voice output device 100, the server device 200 generates the route information indicating the guidance route that the vehicle Ve should travel. Then, the server device 200 generates the control signal S2 related to the information output for the information request of the user based on the information request of the user indicated by the upload signal S1 transmitted by the voice output device 100 thereafter and the traveling state of the vehicle Ve. Then, the server device 200 transmits the generated control signal S2 to the voice output device 100.

In addition, the server device 200 generates content for providing information to and interacting with the user of the vehicle Ve and transmits the content to the voice output device 100. The information provision to the user is mainly a push-type information provision that starts from the server device 200 when the vehicle Ve reaches a predetermined driving state as a trigger. The interaction with the user is basically the pull-type interaction which starts from the inquiry and question from the user. However, the interactions with users may be initiated from the provision of push-type content.

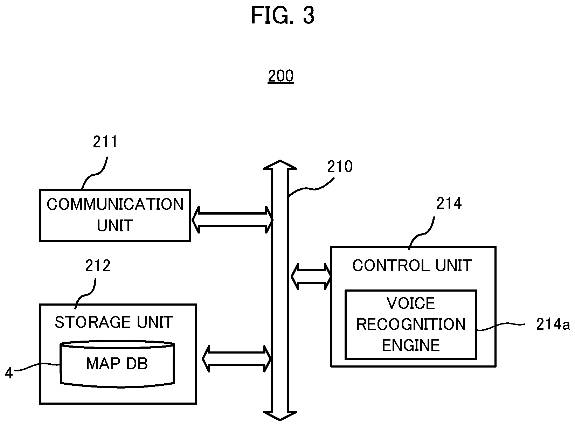

FIG. 3 is a diagram illustrating an example of the schematic configuration of the server device 200. The server device 200 mainly includes a communication unit 211, a storage unit 212, and a control unit 214. Each element in the server device 200 is interconnected via a bus line 210.

The communication unit 211 performs data communication with an external device such as the voice output device 100 based on the control of the control unit 214. The storage unit 212 is configured by various memories such as a RAM, a ROM, a non-volatile memory (including a hard disk drive, a flash memory, etc.). The storage unit 212 stores programs for the server device 200 to execute predetermined processing. The storage unit 212 includes the map DB 4.

The control unit 214 includes a CPU, a GPU and the like, and controls the entire server device 200. The control unit 214 operates together with the voice output device 100 by executing a program stored in the storage unit 212, and executes route guidance processing, information providing processing, or the like for the user. For example, the control unit 214 generates the control signal S2 related to the route information indicating the guidance route or the information output in response to the information request of the user, based on the upload signal S1 received from the voice output device 100 through the communication unit 211. Then, the control unit 214 transmits the generated control signal S2 to the voice output device 100 through the communication unit 211.

The control unit 214 has a voice recognition engine 214a for recognizing the utterance content by the passenger of the vehicle Ve on the basis of the voice included in the driving state information received from the voice output device 100 through the communication section 211. Also, the control unit 214 performs a voice recognition process for recognizing the predetermined words included in the utterance of the passenger of the vehicle Ve by activating the voice recognition engine 214a in the circumstance to be described later. Further, the control unit 214 acquires a score according to the number of times that the the predetermined words are recognized.

### [Push-type content provision]

Next, the push-type content provision will be described. The push-type content provision means that, when the vehicle Ve becomes a predetermined driving state, the voice output device 100 outputs, to the user, the contents related to the driving state. Specifically, the voice output device 100 acquires the driving state information indicating the driving state of the vehicle Ve based on the outputs of the sensor group 115 as described above and transmits the driving state information to the server device 200. The server device 200 stores the table data for providing push-type contents in the storage unit 212. The server device 200 refers to the table data. When the driving state information received from the voice output device 100 mounted on the vehicle Ve matches the trigger condition specified in the table data, the server device 200 acquires the contents to be outputted using the script corresponding to the trigger condition, and transmits the contents to the voice output device 100. The voice output device 100 outputs the contents received from the server device 200. In this way, the contents corresponding to the driving state of the vehicle Ve are outputted to the user by voice.

The driving state information may include, for example, at least one piece of information that can be acquired based on the functions of each part of the voice output device 100, such as the position of the vehicle Ve, the direction of the vehicle Ve, the traffic information around the position of the vehicle Ve (including the speed regulation and the traffic jam information, etc.), the present time, the destination, and the like. The driving state information may include any of the sound obtained by the microphone 117, the image captured by the outside camera 119, and the image captured by the inside camera 120. Further, the driving state information may include information received from the server device 200 through the communication unit 111.

### [Processing related to evaluation of push-type content]

Next, the processing related to the evaluation of the push type content will be described.

### (Concrete Example)

The server device 200 acquires the voice content VC for output to the passenger of the vehicle Ve based on the driving state information of the vehicle Ve received from the voice output device 100, and outputs (transmits) the acquired voice content VC to the voice output device 100.

The voice content VC includes a trigger content VCT, a dynamic content VCD, and a static content VCS.

The trigger content VCT is configured as the content associated with the trigger condition such as the current position of the vehicle Ve. Specifically, the trigger content VCT is configured as, for example, a script SCT "I entered Hiki-gun Kawashima-town from Kawagoe City.".

The dynamic content VCD is configured as a content including a variable part that varies according to the driving state of the vehicle Ve. Specifically, the dynamic content VCD is configured as, for example, a script SCD "The time traveled through Kawagoe City was X minutes." The "X minutes" included in the script SCD corresponds to the variable part that changes according to the traveling time of the vehicle Ve.

The static content VCS is configured as a content that includes at least one keyword associated with the trigger content VCT. Specifically, the static content VCS is configured, for example, as a script SCS "Hiki-gun Kawashima-town has strawberry as a special product." "Strawberry" included in the script SCS corresponds to the keyword associated with "Hiki-gun Kawashima-town" included in the script SCT. In the present embodiment, for example, when a plurality of keywords are associated with one trigger content VCT, at least one keyword incorporated into the static content VCS may be selected from the plurality of keywords. Further, in the present embodiment, for example, a script different from the script SCS can be generated by setting a part other than "strawberry" in the script SCS as a fixed phrase and by incorporating a keyword different from "strawberry" into the fixed phrase.

The following description will be given to an example in which a voice content VC including a script SCT, a SCD and a SCS is output to the passenger of the vehicle Ve.

The server device 200 performs a voice recognition process for recognizing the predetermined words included in the utterance of the passenger of the vehicle Ve after the voice content VC is output, by activating the voice recognition engine 214a until a predetermined time TP elapses immediately after outputting (transmitting) the voice content VC to the voice output device 100. Specifically, the server device 200 uses the voice recognition engine 214a to perform a voice recognition process for recognizing at least one of a word indicating an exclamation to the voice content VC and the keyword in the voice content VC as the predetermined words. In the present embodiment, the utterance content of the passenger of the vehicle Ve may be identified on the basis of the voice included in the driving state information of the vehicle Ve. Further, in the present embodiment, the predetermined time TP may be set as 30 seconds, for example. Further, the predetermined words may be any word indicating a response of the passenger of the vehicle Ve to the voice content VC. Further, hereafter, unless otherwise mentioned, description will be given on the assumption that both the word showing exclamation for the voice content VC and the keyword in the voice content VC are recognized as the predetermined words.

According to the above-described voice recognition process, an exclamation such as "Oh" and "Hmm" can be recognized as a word indicating an exclamation to the voice content VC. Further, according to the above-described voice recognition process, it is possible to recognize "strawberry" as a keyword in the voice content VC.

The server device 200 acquires a score SR according to the number of times that the predetermined words are recognized by the voice recognition process using the voice recognition engine 214a. Specifically, for example, when two passengers on the vehicle Ve talk such as "Oh, strawberries can be picked up well around here.", "Hmm, then do you want to buy a strawberry souvenir?" and "Yeah, let's drop by if there is a strawberry direct sales place!", the server device 200 acquires five points as the scoring SR corresponding to the number of times (five times) that the predetermined words are recognized. Further, for example, when two passenger on the vehicle Ve performed such a conversation that "Strawberries can be picked up well around here." and "It seems so.", the server device 200 acquires one point as the score SR according to the number of times (once) that the predetermined words are recognized.

According to the present embodiment, the server device 200 may change the score SR according to the number of passengers in the vehicle Ve. Specifically, as the score SR when the predetermined words are recognized Y times, the server device 200 may acquire Y-point if two or more passengers are on the vehicle Ve and acquire Z-point which is larger than Y-point if one passenger is on the vehicle Ve, for example.

The server device 200 stops the voice recognition process by the voice recognition engine 214a when the predetermined time TP has elapsed from the last timing of acquiring the score SR after the voice content VC is output. In other words, when the server device 200 was able to acquire the score SR in the period from immediately after outputting (transmitting) the voice content VC to the voice output device 100 to the timing at which the predetermined time TP has elapsed, the server device 200 continues the voice recognition process until the lapse of the predetermined time TP again from the timing when the score SR was last acquired. Incidentally, when the server device 200 cannot acquire the score SR in the period from immediately after outputting (transmitting) the voice content VC to the speech output device 100 to the timing at which the predetermined time TP has elapsed, the server device 200 stops the voice recognition process at the timing at which the predetermined time TP has elapsed.

The server device 200 evaluates the effectiveness of the voice content VC output to the passengers of the vehicle Ve on the basis of the score SR acquired during the period from starting to stopping the voice recognition process using the voice recognition engine 214a. Specifically, for example, when the score SR is a relatively low score, the server device 200 evaluates that the effectiveness of the voice content VC for the passenger of the vehicle Ve is low. Further, for example, when the score SR is a relatively high score, the server device 200 evaluates that the effectiveness of the voice content VC for the passenger of the vehicle Ve is high.

According to the above-described processing, the number of times that the predetermined words are recognized by the voice recognition process and the score SR acquired from the time when the voice recognition processing is started until the time when the voice recognition processing is stopped have a correspondence. Further, according to the above-described processing, the number of times that the predetermined words are recognized by the voice recognition process can be recognized as the result of the voice recognition process. Therefore, the server device 200 according to the present embodiment can evaluate the effectiveness of the voice content VC output to the passenger on the basis of the result of the voice recognition process for recognizing the predetermined words included in the utterance of the passenger of the vehicle Ve. Further, according to the above-described processing, the server device 200 can acquire the score according to the number of times that the predetermined words are recognized by the voice recognition process as an index for evaluating the effectiveness of the voice content VC output to the passenger of the vehicle Ve. Further, according to the above-described processing, it is possible to quantitatively estimate the degree to which the voice content VC influenced the emotion of the passenger of the vehicle Ve on the basis of, for example, the score SR acquired according to the outputting of the voice content VC. Further, according to the above-described processing, since only the predetermined words included in the utterance of the passenger of the vehicle Ve are recognized by the voice recognition process and the voice recognition process is performed within a limited period corresponding to the predetermined time TP, privacy of the passenger can be protected.

### (Processing flow)

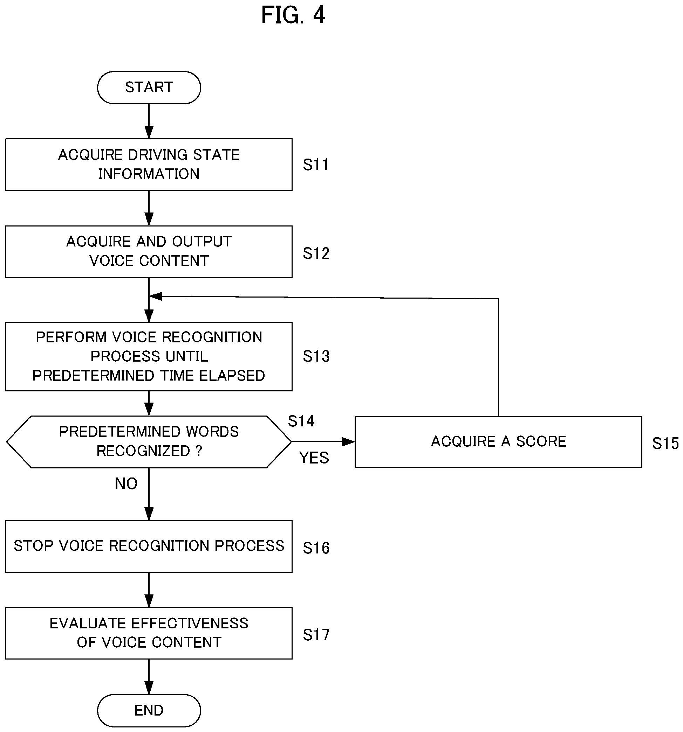

Next, a description will be given of processing performed in the server device 200. FIG. 4 is a flowchart for explaining processing performed in the server device 200.

First, the control unit 214 of the server device 200 acquires the driving state information of the vehicle Ve received from the voice output device 100 (step S11).

Next, the control unit 214 acquires the voice content VC according to the driving state information acquired in step S11, and outputs (transmits) the acquired voice content VC to the voice output device 100 (step S12).

Immediately after step S12, the control unit 214 starts a voice recognition process for recognizing the predetermined words included in the utterance of the passenger of the vehicle Ve that can be identified based on the driving state information of the vehicle. Further, the control unit 214 performs the voice recognition process from the time immediately after step S12 or immediately after step S15 described below until the time when a predetermined time TP has elapsed (step S13).

The control unit 214 determines whether or not the predetermined words included in the utterance of the passenger of the vehicle Ve can be recognized by the voice recognition process in step S13 (step S14).

When the control unit 214 can recognize the predetermined words included in the utterance of the passenger of the vehicle Ve (step S14: YES), the control unit 214 acquires the score SR (step S15). Then, the control unit 214 returns to step S13 and performs the voice recognition process in the time period from immediately after step S15 until the time when the predetermined time TP has elapsed.

When the predetermined words included in the utterance of the passenger of the vehicle Ve cannot be recognized by the voice recognition process in step S13 (step S14: NO), the control unit 214 stops the voice recognition process (step S16).

The control unit 214 evaluates the effectiveness of the voice content VC output to the passenger of the vehicle Ve based on the score SR acquired during the period from immediately after step S12 to immediately before step S16 (step S17).

According to the present embodiment, the control unit 214 has functions as a content acquisition unit, a voice recognition unit, and an evaluation unit. Further, according to the present embodiment, the communication unit 211 has a function as an output unit.

As described above, according to the present embodiment, the effectiveness of the voice content VC can be evaluated based on the recognition result of the predetermined words included in the utterance of the passenger of the vehicle Ve after the voice content VC is outputted. That is, according to the present embodiment, it is possible to evaluate the effectiveness of the push-type content output to the passenger of the vehicle.

Incidentally, according to the present embodiment, for example, the voice output device 100 can perform substantially the same processing as the processing shown in FIG. 4 when the communication unit 111 or the control unit 114 has a function as a content acquisition unit, the control unit 114 has a function as a voice recognition unit and an evaluation unit, and the speaker 118 has a function as an output unit.

In the above-described embodiment, the program can be stored using various types of non-transitory computer-readable medium and supplied to a controller or the like that is a computer. The non-transitory computer-readable medium includes various types of tangible storage medium. Examples of the non-transitory computer-readable medium include a magnetic storage medium (e.g., a flexible disk, a magnetic tape, a hard disk drive), a magneto-optical storage medium (e.g., a magneto-optical disk), a CD-ROM (Read Only Memory), a CD-R, a CD-R/W, a solid-state memory (e.g., a mask ROM, a PROM (Programmable ROM), an EPROM (Erasable PROM), a flash ROM, and a RAM (Random Access Memory)).

While the present invention has been described with reference to the embodiments, the present invention is not limited to the above embodiments. Various modifications that can be understood by a person skilled in the art within the scope of the present invention can be made to the configuration and details of the present invention. That is, the present invention includes, of course, various modifications and modifications that may be made by a person skilled in the art according to the entire disclosure and technical concepts including the scope of claims. In addition, each disclosure of the above-mentioned patent documents cited shall be incorporated by reference in this document.

### DESCRIPTION OF REFERENCE NUMBERS

100 Voice output device
200 Server device
111, 211 Communication unit
112, 212 Storage unit
113 Input unit
114,214 Control unit
115 Sensor group
116 Display unit
117 Microphone
118 Speaker
119 Outside camera
120 Inside camera

## Claims

1. A content evaluation device comprising:
a content acquisition unit configured to acquire a voice content to be output to a passenger of a vehicle;
an output unit configured to output the voice content;
a voice recognition unit configured to perform a voice recognition process for recognizing predetermined words included in utterance of the passenger after the voice content is output; and
an evaluation unit configured to evaluate effectiveness of the voice content output to the passenger based on a result of the voice recognition process.

2. The content evaluation device according to claim 1, wherein the evaluation unit acquires a score according to a number of times that the predetermined words are recognized by the voice recognition process, as an index for evaluating the effectiveness of the voice content.

3. The content evaluation device according to claim 1 or 2, wherein the voice recognition unit performs the voice recognition process in a period from immediately after the voice content is output until a predetermined time elapses.

4. The content evaluation device according to claim 2, wherein the voice recognition unit stops the voice recognition process when a predetermined time has elapsed from the timing at which the score is last acquired after the voice content is output.

5. The content evaluation device according to any one of claims 1 to 4, wherein the voice recognition unit recognizes, as the predetermined words, at least one of a word indicating exclamation on the voice content and a keyword in the voice content.

6. A content evaluation method comprising:
acquiring a voice content to be output to a passenger of a vehicle;
outputting the voice content;
performing a voice recognition process for recognizing predetermined words included in utterance of the passenger after the voice content is output; and
evaluating effectiveness of the voice content output to the passenger based on a result of the voice recognition process.

7. A program executed by a content evaluation device including a computer, the program causing the computer to execute:
acquiring a voice content to be output to a passenger of a vehicle;
outputting the voice content;
performing a voice recognition process for recognizing predetermined words included in utterance of the passenger after the voice content is output; and
evaluating effectiveness of the voice content output to the passenger based on a result of the voice recognition process.

8. A storage medium which stores the program according to claim 7.
